# EUROPÄISCHE PATENTSCHRIFT

(11) **EP 1 985 819 B1**
(45) Veröffentlichungstag und Bekanntmachung des Hinweises auf die Patenterteilung: **29.06.2011**
(21) Anmeldenummer: 08006723.4
(22) Anmeldetag: 02.04.2008
(51) Int. Cl.: F01N 3/021, F01N 3/035, F01N 3/20, B01D 53/00

(54) **Abgasnachbehandlungssystem**
Exhaust gas treatment system
Système de traitement de gaz d'échappement

(30) Priorität: 25.04.2007 DE 102007019460
(43) Veröffentlichungstag der Anmeldung: 29.10.2008
(73) Patentinhaber: MAN Truck & Bus AG, 80995 München (DE)
(72) Erfinder: Döring, Andreas, 80339 München (DE); Jacob, Eberhard, Dr., 82152 Krailling (DE)

(56) Entgegenhaltungen:
- EP-A- 1 357 267
- DE-A1- 10 226 975
- DE-A1-102005 012 066
- DE-A1-102005 039 630
- JP-A- 2006 183 507

## Beschreibung

Gegenstand der Erfindung ist ein Abgasnachbehandlungssystem bei mit Luftüberschuss betriebenen Brennkraftmaschinen, wie Dieselmotoren und Ottomotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerks-bereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ 4N₂+6H₂O (1)

Wird den SCR-Katalysatoren ein platinhaltiger NO-Oxidationskatalysator zur Bildung von NO₂ vorgeschaltet

2NO+O₂ 2NO₂ (2)

so kann die SCR-Reaktion erheblich beschleunigt und die Tieftemperaturaktivität merklich angehoben werden.

NO+2NH₃+NO₂ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Deaktivierungsprobleme aufwerfen, wenn die Abgastemperatur am SCR-Katalysator über 650°C liegt. Aus diesem Grund werden für Hochtemperaturanwendungen V₂O₅-freie Eisen- oder Kupferzeolithe eingesetzt.

Zur Minimierung der Feststoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Verbessern lassen sich Partikelabscheider der vorstehend genannten Art dadurch, dass, wie in der DE 100 20 170 C1 beschrieben, die einzelnen Filterlagen auch quer zur Hauptströmung des Abgases durchströmbar sind. Auf diese Weise wird eine Durchmischung und damit eine Homogenisierung des Abgasstromes erreicht. Eine Anordnung und ein Verfahren, das an Stelle eines Partikelabscheiders der vorstehend beschriebenen Art einen Partikelfilter einsetzt, ist der EP 0 341 832 A2 zu entnehmen. Die vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feststoffpartikel, Regenerationszyklen, wie sie aufwändig bei anderen Anordnungen durchgeführt werden müssen, entfallen dadurch.

2 NO₂ + C 2 NO + CO₂ (4)

NO₂ + C NO + CO (5)

2 C + 2 NO₂ N₂ + 2CO₂ (6)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feststoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feststoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Fremdstoffe die nicht mehr aus dem Abgas entfernt werden können. Zudem kann es beim Einsatz von Partikelfiltern zu einer Verstopfung der Filter durch Ölasche kommen, so dass diese in bestimmten Intervallen ausgebaut und gereinigt werden müssen.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feststoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO NH₃+HNCO (7)

erfolgt zunächst die Thermolyse, d. h. die thermische Zersetzung von Harnstoff. Anschließend erfolgt nach

HNCO+H₂O NH₃+CO₂ (8)

im geringen Umfang eine Hydrolyse, also die Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß 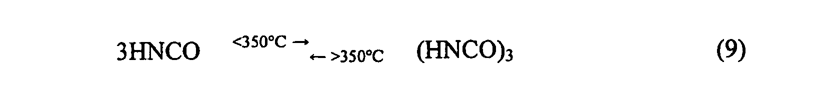 entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Harnstoffzersetzungs- und Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

In Verbindung mit Abgassystemen der vorstehend genannten Art ist aus der DE 10 2005 039630 A1 eine Vorrichtung, ein Reaktor und ein Verfahren zur Reduktion von Stickoxiden im Abgasstrom von Verbrennungskraftmaschinen, insbesondere von Dieselmotoren bekannt. Dabei umfasst die Anordnung einen SCR-Katalysator, der in den Abgasstrom eingeschaltet ist und in dem die Stickoxide mittels Ammoniak unter Bildung von Stickstoff und Wasser katalytisch reduziert werden. Weiter umfasst die Erfindung eine Einheit zur Erzeugung von Ammoniak aus einer Amonniak abspaltenden Substanz, insbesondere aus Harnstoff oder aus einer wässrigen Harnstofflösung. Die Einheit besitzt einen Vorratsbehälter für die Ammoniak abspaltende Substanz, einen Reaktor mit einem Thermolyseraum zur Gewinnung von Ammoniak aus der Substanz und eine Fördereinrichtung zur Beschickung des Reaktors mit der Substanz aus dem Vorratsbehälter. Dabei wird der erzeugte Ammoniak stromaufwärts des SCR-Katalysators in den Abgasstrom eingeleitet. Die für die Thermolyse benötigte Wärmeenergie durch einen Verbrennungsvorgang bereitgestellt. Dazu weist die Erfindung einen Brenner auf, dessen beim Verbrennungsvorgang erzeugte Wärmeenergie in den Thermolyseraum des Reaktors einspeisbar ist.

Ausgehend vom vorstehend beschriebenen Stand der Technik ist es Aufgabe der Erfindung, unter Vermeidung der Nachteile bekannter Anordnungen ein Abgasnachbehandlungssystem zur Stickoxid- und Partikelreduzierung bei mit Luftüberschuss betriebenen Brennkraftmaschinen anzugeben, bei dem insbesondere die Abspaltung von NH₃ aus dem Reduktionsmittels bei möglichst allen Betriebsbedingungen ohne die Bildung problematischer Reaktionsprodukte erfolgt, so dass die Umsetzungsrate der Stickoxide und gegebenenfalls die Abscheide- und Umsetzungsrate der Feststoffpartikel optimiert wird.

Gelöst wir die Aufgabe durch ein Abgasnachbehandlungssystem mit den Merkmalen des Anspruches 1, vorteilhafte Weiterbildungen des Abgasnachbehandlungssystem sind in den abhängigen Ansprüchen gekennzeichnet.

Bei der Lösung wird von einem bekannten Abgasnachbehandlungssystem zur Stickoxid- und Partikelreduzierung bei mit Luftüberschuss betriebenen Brennkraftmaschinen ausgegangen wobei die Stickoxidreduzierung mittels eines SCR-Katalysators und die Partikelreduktion mittels eines Partikelabscheiders oder eines Partikelfilters erfolgt. Bei solchen Systemen ist die Stickoxidreduzierung mittels eines SCR-Katalysators und die Partikelreduktion mittels eines Partikelabscheiders oder eines Partikelfilters erfolgt. Bei solchen Systemen ist im Abgasstrom der Brennkraftmaschine ein Oxidationskatalysator angeordnet, der zumindest einen Teil des im Abgasstrom enthaltenen Stickstoffmonoxids in Stickstoffdioxid überführt. Aus einem Vorratsbehälter für ein Reduktionsmittel erfolgt mittels einer Zumesseinrichtung für das Reduktionsmittel das Einbringen des Reduktionsmittels in das Abgas, wobei die Zumessung des Reduktionsmittels parallel zum Oxidationskatalysator in einen vor dem Oxidationskatalysator vom Abgasstrom abgezweigten und nach dem Oxidationskatalysator in den Abgasstrom rückgeführten Abgasteilstrom erfolgt. Bei dem Reduktionsmittel handelt es sich um eine stromab der Zuführstelle durch das heiße Abgas Ammoniak abspaltende wässrige Harnstofflösung.

In Abweichung zu bisher üblichen Abgasnachbehandlungssystemen ist stromab zur Zuführstelle des Reduktionsmittels motornah ein Thermolysekatalysator im Abgasteilstrom angeordnet, der bei einer Abgastemperatur größer 135° Celsius einerseits den Wasseranteil der wässrigen Harnstofflösung verdampft und der ein hinsichtlich der motornah auftretenden Abgastemperaturen thermisch stabilisiertes Katalysatormaterial aufweist, das den Harnstoff bevorzugt in Isocyansäure umsetzt. Stromab zum Thermolysekatalysator und beabstandet zu diesem befindet sich im Abgasstrom, also stromab zur Rückführung des Abgasteilstroms, wenigstens ein Hydrolysekatalysator, wobei der Hydrolysekatalysator ein Katalysatormaterial aufweist, das die bei der Thermolyse gebildete Isocyansäure mit Hilfe des im Thermolysekatalysators gebildeten Wasserdampfs in Ammoniak und Kohlendioxid überführt. Durch die Aufteilung der Umsetzung der wässrigen Harnstofflösung in Ammoniak in zwei Teilvorgänge, wobei diese Teilvorgänge in getrennten, zueinander beabstandeten und speziell auf die Teilvorgänge hin optimierten Katalysatoren stattfinden, lässt sich in vorteilhafter Weise eine vollständige Umsetzung der wässrigen Harnstofflösung erreichen. Insbesondere auch deshalb, weil der Thermolysekatalysator auch bei geringem verfügbarem Bauraum, wie z. B. in Nutzfahrzeugen mit entsprechenden Brennkraftmaschinen, motornah anbringbar ist, so dass auch bei geringen Abgastemperaturen, z.B. in der Startphase eines Nutzfahrzeugs, eine vollständige Thermolyse erfolgt. Der Abstand zwischen dem Thermolysekatalysator und dem Hydrolysekatalysator bewirkt eine Durchmischung des Abgases mit der Isocyansäure, so dass im Hydrolysekatalysator eine homogene Verteilung der Isocyansäre zur Hydrolyse zur Verfügung steht. Dadurch wird vorteilhaft vermieden, dass Isocyansäure aufgrund lokaler Anhäufungen im Hydrolysekatalysator nicht umgesetzt werden kann und sich durch Trimerisierung Cyanursäure bildet, die nachfolgende Komponenten des Abgassystems verstopfen würde. Ebenfalls vermieden wird, dass sich sogenannte Ammoniaksträhnen ausbilden, wobei diese lokalen Anhäufungen von Ammoniak bei der nachfolgenden Stickoxidreduktion im SCR-Katalysator von Nachteil sind, weil sie die Umsetzungsrate negativ beeinflussen. Die Anordnung aus Thermolysekatalysator und dazu beabstandetem Hydrolysekatalysator erlaubt es darüber hinaus, das Katalysatorgesamtvolumen für die Umsetzung der wässrigen Harnstofflösung in Ammoniak auf ein Minimum zu reduzieren.

Stromab zum Hydrolysekatalysator befindet sich ein Partikelabscheider oder Partikelfilter im Abgasstrom, der die im Partikelabscheider oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt. Die eigentliche Reduktion der Stickoxide erfolgt stromab zum Partikelabscheider oder Partikelfilter mittels eines SCR-Katalysator, der die im Abgasstrom enthaltenen Stickoxide mit Hilfe des abgespaltenen Ammoniaks im Wege der selektiven katalytischen Reduktion zu Stickstoff und Wasserdampf reduziert.

Durch die motornahe Anordnung des Thermolysekatalysator ist es vorteilhaft, diesen aus einem thermisch stabilen Material zu fertigen und so auszubilden, dass durch die in das Abgas eingespritzten Reduktionsmitteltröpfchen, die aufgrund der hohen Abgasgeschwindigkeiten in diesem Bereich stark beschleunigt werden, beim Auftreffen auf die Oberfläche des Thermolysekatalysator keine Beschädigungen durch Tropfenschlag verursachen.

Als vorteilhafte Materialien für den Thermolysekatalysator kommen Stoffe aus der Stoffgruppe Titandioxid, Siliziumdioxid, Aluminiumoxid, Wolframoxid oder Zeolith in Frage, dabei erfolgt die Thermolyse bevorzugt durch das Titandioxid, während Siliziumdioxid, Aluminiumoxid, Wolframoxid einzeln oder in Kombination thermisch stabilisierend wirken.

Um die Verdunstung des Wasseranteils der wässrigen Harnstofflösung insbesondere bei niedrigen Katalysatortemperaturen positiv zu beeinflussen ist es vorteilhaft, wenn der Thermolysekatalysator eine die Verdunstung des Wasseranteils der wässrigen Harnstofflösung begünstigende Porosität aufweist. Durch die Poren vergrößert sich die für die Verdampfung des Wasseranteils wirksame Oberfläche erheblich.

Da demgegenüber am Hydrolysekatalysator kein Wasser mehr verdampft werden muss, ist es vorteilhaft, die Porosität des Hydrolysekatalysators für die Gasphasenreaktion (8) zu optimieren.

Vorteilhafterweise unterscheiden sich demzufolge die Porosität des Thermolysekatalysators und des Hydrolysekatalysators.

Um eine möglichst homogene Verteilung des im Hydrolysekatalysator erzeugten Ammoniaks im Abgas zu erreichen, ist es von Vorteil, wenn der Hydrolysekatalysator einen mit dem Katalysatormaterial beschichteten Träger aufweist, der sowohl in der Hauptstromrichtung des Abgases als auch quer zu dieser vom Abgas durchströmbar ist, derart, dass sich eine Durchmischung des mit dem Ammoniak beladenen Abgasstroms ergibt. Dies lässt sich erreichen wenn der Träger z. B. aus einem Packet von Metallfolien besteht, wobei sich Metallfolien in Welllage und solche in Glattlage abwechseln, so dass sich in der Hauptstromrichtung durchströmbare Kanäle ergeben und die Metallfolien Durchbrechungen aufweisen, die eine Durchströmung des Paketes quer zur Hauptstromrichtung zulassen. Ein derart turbulent ausgebildeter Hydrolysekatalysator verhindert lokale Anhäufungen von Ammoniak zuverlässig. Auch eine Neigung der Katalysatorkanäle zueinander und/ oder zur Anströmrichtung des Abgases ist denkbar.

Die katalytische Beschichtung eines Hydrolysekatalysators besteht vorteilhaft aus einem Washcoat, der wenigstens einen der Stoffe Titandioxid, Siliziumdioxid, Aluminiumoxid, Wolframoxid oder Zeolith enthält.

Um die Partikelabscheiderate des Abgasnachbehandlungssystems insgesamt zu erhöhen ist es vorteilhaft, wenn der Hydrolysekatalysator hinsichtlich des Abgasstroms Turbulenzbereiche und strömungsarme Bereiche aufweist, derart, dass der Hydrolysekatalysator mit dem Abgasstrom mitgeführte Rußpartikel in den strömungsarmen Bereichen anlagert und mit Hilfe des im Abgasstrom enthaltenen Stickstoffdioxids in Kohlenmonoxid, Kohlendioxid, Stickstoff und Stickstoffmonoxid umsetzt.

In der Praxis haben sich bestimmte Grundsätze bei der Wahl der Katalysatormaterialien für den Thermolysekatalysator und für den Hydrolysekatalysator im Hinblick auf eine Optimierung des Gesamtumsatzes von wässriger Harnstofflösung in Ammoniak als vorteilhaft herauskristallisiert. So ist es von Vorteil, wenn der Thermolysekatalysator einen geringeren Anteil Titandioxid enthält, als der Hydrolysekatalysator. Ebenfalls von Vorteil ist es, wenn der Thermolysekatalysator einen höheren Anteil an Siliziumdioxid enthält, als der Hydrolysekatalysator.

Auch die Kristallstruktur des Titandioxids hat einen Einfluss bei der Optimierung der Gesamtanordnung, so ist es von Vorteil, wenn der Anteil des Titandioxids in der Anatas-Modifikation beim Thermolysekatalysator niedriger und/ oder dessen Anteil in der Rutil-Modifikation höher liegt, als beim Hydrolysekatalysator.

Als besonders vorteilhaft hat sich erwiesen, wenn der Anatas-Anteil des Thermolysekatalysator zwischen 0% und 30% und/ oder dessen Rutil-Anteil zwischen 8% und 80% und/ oder dessen Siliziumdioxid-Anteil zwischen 30% und 100% liegt.

Weiter ist es von Vorteil wenn der Anatas-Anteil des Hydrolysekatalysator zwischen 20% und 80% und/ oder dessen Rutil-Anteil zwischen 0% und 30% und/ oder dessen Siliziumdioxid-Anteil zwischen 20% und 60% liegt.

Zur Einsparung von Kosten und Bauraum kann es vorteilhaft sein den Hydrolysekatalysator durch eine teilweise oder vollständige Beschichtung des Partikelabscheiders oder Partikelfilters zu bilden. Entsprechend ist es auch möglich den SCR-Katalysator durch eine teilweise oder vollständige Beschichtung des Partikelabscheiders oder Partikelfilters zu realisieren. Gleichfalls ist eine Kombination dieser Möglichkeiten denkbar, so dass sowohl der Hydrolysekatalysator, als auch der SCR-Katalysator durch eine jeweils teilweise Beschichtung des Partikelabscheiders oder Partikelfilters realisiert sind.

Nachfolgend wird die Erfindung mit Hilfe der Zeichnungen anhand einiger Beispiele näher erläutert, es zeigen:
- Fig. 1: Ein erstes Abgasnachbehandlungssystem mit Teilstromthermolyse und Haupt-stromhydrolyse
- Fig. 2: Ein Abgasnachbehandlungssystem nach Fig. 1 mit regelbarem Teilstrom
- Fig. 3: Ein Abgasnachbehandlungssystem für Brennkraftmaschinen mit Turbolader
- Fig. 4: Eine Prinzipdarstellung einer Trägerstruktur

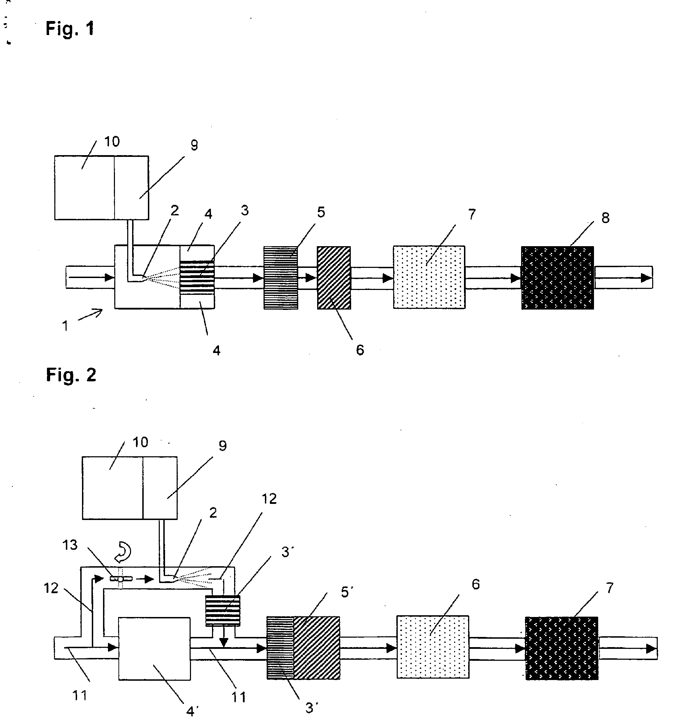

Eine Anordnung zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in den Figuren durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung. Die Zumessung erfolgt in Abhängigkeit von Betriebsparametern der Brennkraftmaschine, gesteuert über eine Motorsteuereinheit (nicht dargestellt) in der Weise, dass eine in Abhängigkeit von Betriebsparametern der Brennkraftmaschine gesteuerte Zumesseinrichtung 9, die die wässrige Harnstofflösung aus einem Vorratsbehälter 10 entnimmt und über eine Düse 2, je nach Betriebszustand der Brennkraftmaschine, in vorgegebenen Mengen in den Abgasstrom einspritzt. Stromab zum Einspritzpunkt befinden sich, parallel zueinander im Abgasstrom angeordnet, ein Thermolysekatalysator 3 und ein Oxidationskatalysator 4. Die Eindüsung der wässrigen Harnstofflösung erfolgt so, dass diese nur in den Teilstrom gelangt, der über den Thermolysekatalysator 3 führt. Die Aufgabe des Thermolysekatalysators 3 ist es, die wässrige Harnstofflösung in Wasserdampf und Isocyansäure überzuführen, dies geschieht nach der Beziehung

[(NH₂)₂CO·7H₂O]_{fl} >135°C [(NH₂)₂CO]_{fl} + 7H₂O (10)

Verdampfung des Wassers und

[(NH₂)₂CO]_{fl} NH₃ + HNCO (11)

### Harnstoff-Thermolyse

Die Aufgabe des parallel zum Thermolysekatalysator 3 angeordneten Oxidationskatalysators 4 besteht darin, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Oxidation der kohlenstoffhaltigen Feststoffpartikel und andererseits bei der nachgeordneten SCR-Reaktion, wie dies nachfolgend noch näher beschrieben ist.

Stromab zu der Parallelanordnung aus Thermolysekatalysator 3 und Oxidationskatalysators 4 und beabstandet insbesondere zum Thermolysekatalysator 3 ist im Abgasstrom wenigstens ein Hydrolysekatalysator 5 angeordnet, wobei der Hydrolysekatalysator 5 ein Katalysatormaterial aufweist, das die bei der Thermolyse gebildete Isocyansäure mit Hilfe des im Thermolysekatalysators gebildeten Wasserdampfs nach der mit (8) bezeichneten Reaktion in Ammoniak und Kohlendioxid überführt.

Stromab zum Hydrolysekatalysator 5 ist ein Partikelabscheider 6 angeordnet, der die im Abgas befindlichen Rußpatikel anlagert. Die so im Partikelabscheider 6 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelabscheider 5 entfallen.

Die eigentliche selektive katalytische Reduktion der Stickoxide erfolgt in stromab zum Partikelabscheider gelegenen SCR-Katalysator 7, der einen möglichst großen Anteil der im Abgas vorhandenen Stickoxide (NOₓ) bei gleichzeitiger hoher Selektivität der Reduktion in Stickstoff und Wasserdampf überführen soll, ohne dass überschüssiger Ammoniak (NH₃) im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene NO, es ist demnach wünschenswert, den Oxidationskatalysator 4 so auszulegen, dass ein möglichst hoher Anteil an Stickstoffmonoxid in Stickstoffdioxid übergeführt wird, also nach Möglichkeit mehr als zur Umsetzung der Rußpartikel im Partikelabscheider nötig ist. Durch die stark exotherme Rußoxidation kann es zu einem deutlichen Temperaturanstieg kommen, so dass stromab des Partikelabscheiders durchaus Temperaturen oberhalb von 650°C, die zu einer Schädigung V₂O₅-haltiger SCR-Katatalysatoren führen, auftreten können. Aus diesem Grund kann der Einsatz von V₂O₅-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 8 nachgeordnet, mit dem das überschüssige NH₃ in Stickstoff und Wasserdampf übergeführt wird. Diese Oxidationsreaktion sollte möglichst selektiv ablaufen, so dass zumindest Anteile von Iridium oder Iridiumoxid als Aktivmaterial für den NH₃-Oxidationskatalysator 8 verwendet werden sollten. Wird dagegen ein hoher Umsatz bei geringer Selektivität angestrebt, kommen als Aktivmaterialien Platin und/oder Palladium und/oder deren Oxide in Frage.

An Stelle des Partikelabscheiders kann, abweichend zum Beispiel nach Figur 1, ein Partikelfilter eingesetzt werden, der Unterschied zwischen Partikelabscheider und Partikelfilter wurde bereits ausgeführt. Die Austauschbarkeit von Partikelabscheider und Partikelfilter gilt auch für die nachfolgend beschriebenen Beispiele ohne dass darauf nochmals explizit hingewiesen wird.

Ein weiteres Ausführungsbeispiel für das erfindungsgemäße Abgasnachbehandlungssystem ist in Fig. 2 gezeigt. Nachdem sich dieses Beispiel von dem Beispiel nach Figur 1 nur in der Aufbereitung des Reduktionsmittels unterscheidet, werden nachfolgend nur die abweichenden Teile beschrieben, hinsichtlich der zum Beispiel nach Figur 1 gleichen Teile wird auf die einschlägigen Beschreibungsteile um Beispiel nach Figur 1 verwiesen.

Stromauf zu einem im Abgashauptstrom 11 befindlichen Oxidationskatalysator 4', der Stickstoffmonoxid zu Stickstoffdioxid oxidiert, zweigt vom Abgashauptstrom 11 ein Abgasteilstrom 12 ab, der über ein mittels einer Motorsteuereilrichtung (nicht dargestellt) in Abhängigkeit von Betriebsparametern der Brennkraftmaschine steuerbares Absperrorgan 13 geführt ist. Aufgabe des Absperrorgans 13 ist es, einerseits Massenstrom und Abgasmenge im Abgasteilstrom 12 in Abhängigkeit vom Betriebspunkt der Brennkraftmaschine zu steuern und andererseits bei bestimmten Betriebsbedingungen, z. B. im Motorbremsbetrieb einer in ein Nutzfahrzeug eingebauten Brennkraftmaschine den Rückstrom von mit Isocyansäure beladenen Abgasen in Richtung Brennkraftmaschine zu unterbinden. Stromab zum Absperrorgan 13 ist eine Zumesseinrichtung für das Reduktionsmittel angeordnet, die mit der zur Figur 1 beschriebenen identisch ist. Um Wiederholungen zu vermeiden wird auf die entsprechenden Passagen der Beschreibung zu Figur 1 verwiesen.

Stromab zur Zuführstelle für das Reduktionsmittel ist wiederum ein Thermolysekatalysator 3' angeordnet, der die Zersetzung des Reduktionsmittels in Isocyansäure und Ammoniak auch bei ungünstigen Temperaturverhältnissen sicherstellt. Der Abgasteilstrom 12 mündet stromab des Oxidationskatalysators 4' wieder in den Abgashauptstrom 11 und wird zusammen mit diesem, beabstandet zum Thermolysekatalysator 3', einem Hydrolysekatalysator 5' zugeführt, die Reaktion im Hydrolysekatalysator 5' entspricht der zu Figur 1 beschriebenen.

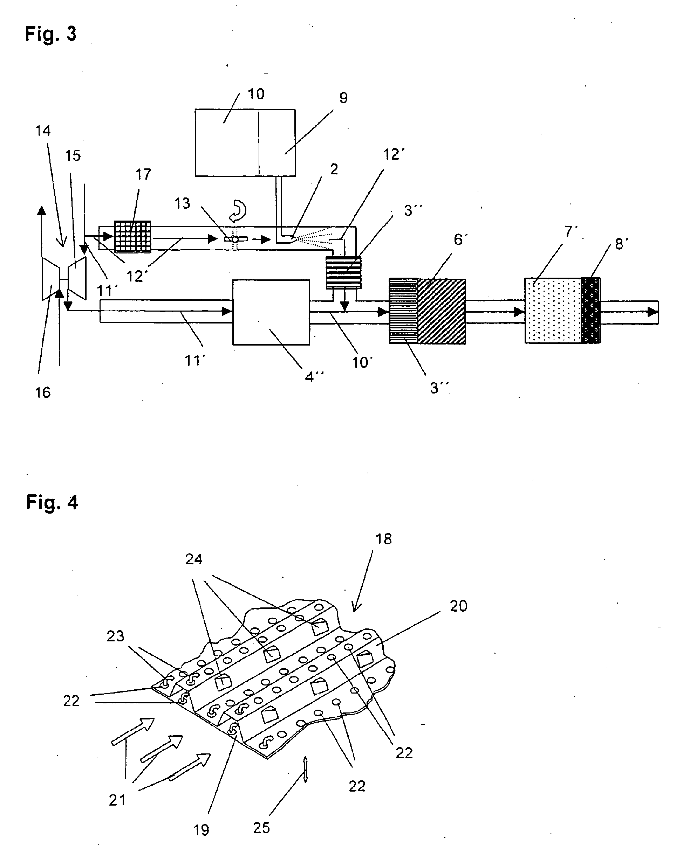

Der Abstand zwischen Thermolysekatalysator und Hydrolysekatalysator ist, ebenso wie in den Beispielen nach den Figuren 1 und 3, deshalb wichtig, weil so eine gleichmäßige Verteilung der Isocyansäure erreichbar ist, bevor das Gemisch in den Hydrolysekatalysator eintritt. Diese gleichmäßige Verteilung sorgt mit für eine optimale Umsetzung im Hydrolysekatalysator so dass keine problematischen Reaktionsprodukte wie Cyanursäure entstehen können.

Stromab zum Hydrolysekatalysator wird der mit Ammoniak beladene Abgasstrom dem Partikelabscheider 6', dem SCR-Katalysator 7 und dem NH₃-Oxidationskatalysator 8 zugeführt, deren Funktion bereits in Verbindung mit Figur 1 ausführlich erläutert wurde. Es wird hierzu auf die Beschreibung zu Figur 1 verwiesen.

Wie im Beispiel nach Figur 2 gezeigt, können der Hydrolysekatalysator 5' und der Partikelabscheider 6' in einem Gehäuse angeordnet sein.

Bei heute in Nutzfahrzeugen betriebenen Brennkraftmaschinen ist üblicherweise eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage für die Thermolyse des Reduktionsmittel ausreichende Abgastemperaturen zu erreichen. Abhilfe für dieses Problem schafft die Anordnung nach Fig. 3. Wie dort gezeigt, verzweigt der von der Brennkraftmaschine (nicht dargestellt) kommende Abgasstrom bereits vor der Turbine 15 des Abgasturboladers 14 in einen Abgashauptstrom 11', der über die Turbine 15 geführt ist und über diese den Verdichter 16 antreibt und einen Abgasteilstrom 12'. Der Abgasteilstrom 12' ist über einen Oxidationskatalysator 17 geführt, der einerseits in der normalen durch die Pfeile angedeuteten Strömungsrichtung des Abgases Stickstoffmonoxid in Stickstoffdioxid umsetzt und andererseits z. B. im Motorbremsbetrieb eventuell mit dem Abgasstrom in Richtung Brennkraftmaschine zurückströmende Isocyansäure bzw. zurückströmendes noch nicht umgesetztes Reduktionsmittel oxidiert. Stromab zum Oxidationskatalysator 17 schließt sich im Abgasteilstrom 12'ein Absperrorgan 13 an, das in Aufbau und Funktion dem in Verbindung mit Figur 2 beschriebenen Absperrorgan entspricht, es wird hierzu auf die einschlägigen Teile der Beschreibung zur Figur 1 verwiesen. Stromab zum Absperrorgan wird mit einer Zumesseinrichtung 9 wie sie bereits zu Figur 2 beschrieben ist, das Reduktionsmittel in den Abgasteilstrom 12' zugeführt, das durch die im Abgasteilstrom 12' herrschende relativ hohe Abgastemperatur und den der Zuführstelle nachgeordneten Thermolysekatalysator 3'', den Wasseranteil der wässrigen Harnstofflösung verdampft und den Harnstoff bevorzugt in Isocyansäure überführt. Parallel zu dem Abgasnebenstrom 12' wird der Abgashauptstrom 11' über einen Oxidationskatalysator 4" geführt, der wiederum im Abgas enthaltenes Stickstoffmonoxid zu Stickstoffdioxid oxidiert. Stromab zum Oxidationskatalysator 4" im Abgashauptstrom 11' und dem Thermolysekatalysator 3'' im Abgasteilstrom 12' vereinen sich die parallel geführten Abgasströme wieder und durchströmen den stromab gelegenen Hydrolysekatalysator 5', wo, wie bereits ausgeführt, die Hydrolyse der Isocyansäure zu Ammoniak und Kohlendioxid erfolgt. Dem Hydrolysekatalysator nachgeordnet schließt sich ein Partikelabscheider 6' an, wo, wie ebenfalls bereits zu den anderen Ausführungsbeispielen ausgeführt, die im Partikelabscheider 6' angelagerten Rußpartikel mit Hilfe des in den Oxidationskatalysatoren 4'' und 17 erzeugten Stickstoffdioxids zu Kohlemnonoxid, Kohlendioxid, Stickstoff und Stickstoffmonoxid kontinuierlich umgesetzt werden. Dem Partikelabscheider ist ein SCR-Katalysator 7' nachgeordnet, der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 7' in seinem stromab gelegenen Bereich mit einem einen NH₃-Oxidationskatalysator 8' ausbildenden Aktivmaterial beschichtet.

Handelt es sich bei der Turbine 15 in Abweichung zum Beispiel nach Figur 3 um eine zweiflutig gespeiste Turbine, wobei die eine Flut von einer ersten Anzahl von Zylinder und die andere Flut von einer zweiten Anzahl von Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern (z.B. Kraftstoffeinspritzzeiten- oder mengen) betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder im Niedriglastbereich, z. B. durch eine Nacheinspritzung im Expansions- oder Ausschiebetakt, angehoben wird.

Bei Brennkraftmaschinen mit zwei Zylinderbänken, die üblicherweise für jede der Zylinderbänke einen eigenen Abgasturbolader aufweisen, so dass die Turbine des einen Abgasturboladers von der einen Zylinderbank der Brennkraftmaschine und die Turbine des anderen Abgasturboladers von der anderen Zylinderbank der Brennkraftmaschine mit Abgas beschickt wird, ist es vorteilhaft, den Abgasteilstrom vor der Turbine eines der beiden Abgasturbolader vom Abgasstrom abzuzweigen. Die Zylinder der Zylinderbank von deren Abgastrakt der Abgasteilstroms abzweigt, können dann mit anderen Motorparametern (z.B. Kraftstoffeinspritzzeiten- oder mengen) betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder im Niedriglastbereich, z. B. durch eine Nacheinspritzung im Expansions- oder Ausschubtakt, angehoben wird.

Hinsichtlich der in den vorstehenden Beispielen angesprochenen Katalysatoren ist anzumerken, dass es sich um Vollkatalysatoren und/oder Beschichtungskatalysatoren handelt, die Aktivkomponenten der Katalysatoren können auf keramische und/oder metallische und/oder silikathaltige und/oder quarzhaltige Träger aufgebracht sein. Für die Thermolysekatalysator ebenso wie die Hydrolysekatalysatoren haben sich metallische Träger, insbesondere in der Form von Folienpaketen aus aufeinander folgenden Folien in Glatt- und in Welllage, besonders bewährt. Herstellbar sind derartige Katalysatoren mit Hilfe vieler bekannter Herstellverfahren, es wird hierzu ausdrücklich auf die einschlägige Fachliteratur verwiesen.

Für die in den vorstehenden Beispielen angesprochenen Oxidationskatalysatoren lassen sich Platin und/oder Palladium und/oder deren Oxide und/oder Zeolithe als Aktivmaterialien einsetzen. Als Aktivkomponenten für die SCR-Katalysatoren zur Reduktion von Stickoxiden mit Hilfe von Ammoniak kommen Vanadium und/oder Vanadiumpentoxid und/oder Titandioxid und/oder Wolframoxid und/oder kupferhaltige Zeolithe und/oder eisenhaltige Zeolithe zum Einsatz.

Für die Thermolysekatalysatoren zur bevorzugten Erzeugung von Isocyansäure und die Hydrolysekatalysatoren für die Überführung der Isocyansäure in Ammoniak können als Aktivkomponenten Titandioxid und/oder Siliziumdioxid und/oder Aluminiumoxid und/oder Wolframoxid und/ oder Zeolithe zur Anwendung kommen. Dabei ist die Zusammensetzung des Aktivmaterials der Thermolysekatalysatoren unterschiedlich zu der Zusammensetzung des Aktivmaterials der Hydrolysekatalysatoren. So sind die Thermolysekatalysatoren insbesondere auf thermische Stabilität auszulegen, weil sie insbesondere im Volllastbetrieb der Brennkraftmaschine sehr hohen Temperaturen ausgesetzt sind. Weiter ist bei den Thermolysekatalysatoren eine mechanische Festigkeit von Beschichtung und Träger erforderlich die dem Tropfenschlag wiederstehen, der durch die im Abgasstrom beschleunigten Harnstofftröpfchen auftritt. Als vorteilhaft hat es sich erwiesen, dass der Thermolysekatalysator einen geringeren Anteil Titandioxid enthält als der Hydrolysekatalysator. Im Gegenzug kann einen höherer Anteil an Siliziumdioxid vorgesehen sein, der thermisch stabilisierend wirkt, wie auch Aluminiumoxid oder Wolframoxid oder Gemische aus diesen Materialein.

Auch die Kristallstruktur des Titanoxids beeinflusst die Reaktivität und thermische Stabilität der Beschichtung, es ist deshalb von Vorteil wenn der Anteil des Titandioxids in der Anatas-Modifikation beim Thennolysekatalysator niedriger und/ oder der Anteil in der Rutil-Modifikation höher liegt als beim Hydrolysekatalysator. Dadurch wird zwar die Reaktivität des Thermolysekatalysators herabgesetzt, dies ist jedoch hinnehmbar, weil die thermische Stabilität erheblich ansteigt.

Als besonders vorteilhaft hat es sich erwiesen, wenn der Anatas-Anteil des Thermolysekatalysator zwischen 0% und 30% und/ oder dessen Rutil-Anteil zwischen 8% und 80% und/ oder dessen Siliziumdioxid-Anteil zwischen 30% und 100% liegt.

Vorteilhaft für den Hydrolysekatalysator ist es hingegen, wenn dessen Anatas-Anteil zwischen 20% und 80% und/ oder dessen Rutil-Anteil zwischen 0% und 30% und/ oder dessen Siliziumdioxid-Anteil zwischen 20% und 60% liegt.

Eine besonders vorteilhafte Trägerstruktur für einen Thermolysekatalysator insbesondere aber für einen Hydrolysekatalysator zeigt Fig. 4 schematisch in Teildarstellung. Dargestellt ist eine Anordnung aus zwei benachbarten Folien aus einem Paket von Metallfolien, wobei Glattlagen 19 und in Welllagen 20 abwechselnd aufeinander folgen. Durch diese Abfolge bilden sich in der durch die Pfeile 21 angedeuteten Hauptstromrichtung des Abgases Strömungskanäle aus, die das Abgas ohne größeren Strömungswiderstand durchströmen lassen. Um eine Querströmung 25 senkrecht zu den Glattlagen 19 und den Welllagen 20 zuzulassen, sind diese mit Lochungen 22 versehen, so dass das Gemisch aus Abgas, Harnstoff und Harnstoffzersetzungsprodukte, wie durch die gebogenen Peile 23 angedeutet, von einer Lage zur nächsten überströmen kann, so dass eine effektive Durchmischung und damit eine Homogenisierung des Stoffgemisches erreicht wird.

Insbesondere für den Hydrolysekatalysator schaffen derart turbulente Trägerstrukturen einen Zusatznutzen in der Weise, dass sich, ebenso wie bei Partikelabscheidern, Rußpartikel an den Wänden ablagern, die dann in der von den Partikelabscheidern her bekannten Reaktion durch das mit Hilfe eines Oxidationskatalysators erzeugte Stickstoffdioxid zu Kohlenmonoxid, Kohlendioxid, Stickstoff und Stickstoffmonoxid kontinuierlich umgesetzt werden. Verstärken lässt sich dieser Effekt, wenn in der Hauptströmungsrichtung des Abgases gesehen rampenförmige Ausfommngen 24 an z. B. den Welllagen 20 angeordnet sind, so dass sich in deren Strömungsschatten Totzonen bilden. In diesen Totzonen lagern sich Rußpartikel bevorzugt ab.

Selbstverständlich kann es sinnvoll sein, mehrere Katalysatoren und/oder Partikelabscheider in einem gemeinsamen Gehäuse unterzubringen, um Bauraum einzusparen und die Kosten zu verringern. So bietet es sich an, den Hydrolysekatalysator und den Partikelabscheider in ein gemeinsames Gehäuse zu integrieren, auch eine Zusammenfassung von Hydrolysekatalysator, Partikelabscheider, SCR-Katalysator und NH3-Oxidationskatalysator kann beispielsweise bei Nutzfahrzeugen sinnvoll sein. Weiter ist es möglich den Hydrolysekatalysator - bei geeigneter Trägerstruktur - durch Beschichtung des Partikelabscheiders oder Partikelfilters oder eines Teils davon mit entsprechendem Katalysatormaterial zu realisieren. Entsprechendes gilt auch für den SCR-Katalysator. Gleichfalls ist eine Kombination aus Hydrolysekatalysator und SCR-Katalysator als Beschichtung auf einem Partikelabscheider oder Partikelfilter denkbar.

Da es beim Einsatz von Partikelfiltern zu einer Verstopfung der Filter durch Ölasche kommen kann, ist es sinnvoll, die Filter so zu verbauen, dass diese auswechselbar und damit leicht zu reinigen sind.

Um das Abgasnachbehandlungssystem in seinem optimalen Betriebsbereich zu betreiben, kann die Abgastemperatur und/oder der Gehalt an Stickstoffdioxid zur Oxidation von Partikeln verändert werden. Die geschieht z. B. durch Verstellen von Motorparametern und/oder durch Anheben der Kohlenwasserstoffkonzentration mit Hilfe einer Verstellung von Motorparametern und/oder durch Zuführung von Kohlenwasserstoffen in den Abgasstrom stromauf der Oxidationskatalysatoren.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Abgasnachbehandlungssystem zur Stickoxid- und Partikelreduzierung bei mit Luftüberschuss betriebenen Brennkraftmaschinen, wobei die Stickoxidreduzierung mittels eines SCR-Katalysators (7, 7') und die Partikelreduktion mittels eines Partikelabscheiders (6, 6') oder eines Partikelfilters erfolgt, wobei
- im Abgasstrom der Brennkraftmaschine ein Oxidationskatalysator (4, 4', 4", 17) angeordnet ist, der zumindest einen Teil des im Abgasstrom enthaltenen Stickstoffmonoxids in Stickstoffdioxid überführt,
- ein Vorratsbehälter (10) für ein Reduktionsmittel und eine Zumesseinrichtung (9) für das Reduktionsmittel vorgesehen sind, wobei die Zumesseinrichtung (9) das Reduktionsmittel parallel zum Oxidationskatalysator (4, 4', 4") in einen vor dem Oxidationskatalysator (4, 4', 4") vom Abgasstrom abgezweigten und nach dem Oxidationskatalysator (4, 4', 4") in den Abgasstrom rückgeführten Abgasteilstrom zugibt,
- das Reduktionsmittel eine stromab der Zuführstelle durch das heiße Abgas Ammoniak abspaltende wässrige Harnstofflösung ist,
**dadurch gekennzeichnet, dass**
- stromab zur Zuführstelle des Reduktionsmittels motornah ein Thermolysekatalysator (3, 3', 3") im Abgasteilstrom angeordnet ist, der bei einer Abgastemperatur größer 135° Celsius einerseits den Wasseranteil der wässrigen Harnstofflösung verdampft und der ein hinsichtlich der motomah auftretenden Abgastemperaturen thermisch stabilisiertes Katalysatormaterial aufweist, das andererseits den Harnstoff bevorzugt in Isocyansäure umsetzt,
- stromab zum Thermolysekatalysator (3, 3', 3 ") und beabstandet zu diesem im Abgasstrom, stromab zur Rückführung des Abgasteilstroms, wenigstens ein Hydrolysekatalysator (5, 5') angeordnet ist, wobei der Hydrolysekatalysator (5, 5') ein Katalysatormaterial aufweist, das die bei der Thermolyse gebildete Isocyansäure mit Hilfe des im Thermolysekatalysators gebildeten Wasserdampfs in Ammoniak und Kohlendioxid überführt,
- stromab zum Hydrolysekatalysator (5, 5') ein Partikelabscheider (6, 6') oder Partikelfilter im Abgasstrom angeordnet ist, der die im Partikelabscheider (6,6') oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt, stromab zum Partikelabscheider (6, 6') oder Partikelfilter ein SCR-Katalysator (7, 7') angeordnet ist, der die im Abgasstrom enthaltenen Stickoxide mit Hilfe des abgespaltenen Ammoniaks im Wege der selektiven katalytischen Reduktion zu Stickstoff und Wasserdampf reduziert.

2. Abgasnachbehandlungssystem nach Anspruch 1, **dadurch gekennzeichnet, dass** der Thermolysekatalysator (3, 3', 3") gegen Tropfenschlag resistent ist und aus einem thermisch stabileren Material besteht als der Hydrolysekatalysator (5, 5').

3. Abgasnachbehandlungssystem nach Anspruch 1, **dadurch gekennzeichnet, dass** der Thermolysekatalysator (3, 3', 3 ") wenigstens einen der Stoffe Titandioxid, Siliziumdioxid, Aluminiumoxid, Wolframoxid oder Zeolyth enthält.

4. Abgasnachbehandlungssystem nach Anspruch 1, **dadurch gekennzeichnet, dass** der Thermolysekatalysator (3, 3', 3") eine die Verdunstung des Wasseranteils der wässrigen Harnstofflösung begünstigende Porosität aufweist.

5. Abgasnachbehandlungssystem nach Anspruch 1, **dadurch gekennzeichnet, dass** der Hydrolysekatalysator (5, 5') einen Träger (18) aufweist, der sowohl in der Hauptstromrichtung des Abgases als auch quer zu dieser vom Abgas durchströmbar ist, derart, dass sich eine Durchmischung des Abgases ergibt.

6. Abgasnachbehandlungssystem nach Anspruch 1, **dadurch gekennzeichnet, dass** der Hydrolysekatalysator (5, 5') mit einem Washcoat beschichtet ist der wenigstens einen der Stoffe Titandioxid. Siliziumdioxid, Aluminiumoxid, Wolframoxid oder Zeolith enthält.

7. Abgasnachbehandlungssystem nach Anspruch 1, **dadurch gekennzeichnet, dass** der Hydrolysekatalysator (5, 5') hinsichtlich des Abgasstroms Turbulenzbereiche und strömungsarme Bereiche aufweist, derart, dass der Hydrolysekatalysator (5, 5') mit dem Abgasstrom mitgeführte Rußpartikel in den strömungsarmen Bereichen anlagern und mit Hilfe des im Abgasstrom enthaltenen Stickstoffdioxids in Kohlenmonoxid, Kohlendioxid, Stickstoff und Stickstoffmonoxid umsetzt.

8. Abgasnachbehandlungssystem nach einem der vorhergehenden Ansprüche, **dadurch gekennzeichnet, dass** der Thermolysekatalysator (3, 3',3") einen geringeren Anteil Titandioxid enthält als der Hydrolysekatalysator (5, 5').

9. Abgasnachbehandlungssystem nach einem der vorhergehenden Ansprüche, **dadurch gekennzeichnet, dass** der Thermolysekatalysator (3, 3', 3 ") einen höheren Anteil an Siliziumdioxid enthält als der Hydrolysekatalysator (5, 5').

10. Abgasnachbehandlungssystem nach einem der vorhergehenden Ansprüche, **dadurch gekennzeichnet, dass** der Anatas-Anteil des Thermolysekatalysator (3, 3', 3") niedriger und/ oder dessen Rutil-Anteil höher liegt als beim Hydrolysekatalysator (5, 5').

11. Abgasnachbehandlungssystem nach einem der vorhergehenden Ansprüche, **dadurch gekennzeichnet, dass** der Anatas-Anteil des Thermolysekatalysator (3, 3', 3") zwischen 0% und 30% und/ oder dessen Rutil-Anteil zwischen 8% und 80% und/ oder dessen Siliziumdioxid-Anteil- zwischen 30% und 100% liegt.

12. Abgasnachbehandlungssystem nach einem der vorhergehenden Ansprüche, **dadurch gekennzeichnet, dass** der Anatas-Anteil des Hydrolysekatalysator (5, 5 ') zwischen 20% und 80% und/ oder dessen Rutil-Anteil zwischen 0% und 30% und/ oder dessen Siliziumdioxid-Anteil zwischen 20% und 60% liegt.

13. Abgasnachbehandlungssystem nach einem der vorhergehenden Ansprüche, **dadurch gekennzeichnet; dass** der Hydrolysekatalysator durch eine teilweise oder vollständige Beschichtung des Partikelabscheiders oder Partikelfilters mit entsprechendem Katalysatormaterial gebildet ist.

14. Abgasnachbehandlungssystem nach einem der vorhergehenden Ansprüche, **dadurch gekennzeichnet, dass** der SCR-Katalysator durch eine teilweise oder vollständige Beschichtung des Partikelabscheiders oder Partikelfilters mit entsprechendem Katalysatormaterial gebildet ist.

15. Abgasnachbehandlungssystem nach einem der vorhergehenden Ansprüche, **dadurch gekennzeichnet, dass** sowohl der Hydrolysekatalysator, als auch der SCR-Katalysator durch eine jeweils teilweise Beschichtung des Partikelabscheiders oder Partikelfilters mit entsprechendem Katalysatormaterial gebildet sind.

## Claims

1. An exhaust aftertreatment system for reducing nitrogen oxides and particles in internal combustion engines operated with excess air, the nitrogen oxide reduction taking place by means of an SCR catalyst (7, 7') and the particle reduction by means of a particle separator (6, 6') or a particle filter, wherein
- an oxidation catalyst (4, 4', 4", 17) which converts at least part of the nitrogen monoxide contained in the exhaust stream into nitrogen dioxide is arranged in the exhaust stream of the internal combustion engine,
- a storage container (10) for a reducing agent and an admetering means (9) for the reducing agent are provided, the admetering means (9) adding the reducing agent in parallel to the oxidation catalyst (4, 4', 4") to a partial exhaust stream which is branched off from the exhaust stream before the oxidation catalyst (4, 4', 4") and is returned to the exhaust stream after the oxidation catalyst (4, 4', 4"),
- the reducing agent being an aqueous urea solution which splits off ammonia downstream from the supply point due to the hot exhaust,
**characterised in that**
- a thermolysis catalyst (3,3',3") is arranged in the partial exhaust stream downstream from the point of supply of the reducing agent close to the engine, which catalyst at an exhaust temperature of greater than 135° Celsius on one hand evaporates the water content of the aqueous urea solution, and which has a catalyst material which is thermally stabilised with regard to the exhaust temperatures occurring close to the engine, which catalyst material on the other hand converts the urea preferably into isocyanic acid,
- downstream from the thermolysis catalyst (3, 3, 3") and spaced apart therefrom in the exhaust stream, downstream from the point of return of the partial exhaust stream, there is arranged at least one hydrolysis catalyst (5, 5'), the hydrolysis catalyst (5,5') having a catalyst material which converts the isocyanic acid formed upon the thermolysis with the aid of the water vapour formed at the thermolysis catalyst into ammonia and carbon dioxide,
- downstream from the hydrolysis catalyst (5, 5') a particle separator (6, 6') or particle filter is arranged in the exhaust stream, which separator or filter converts the soot particles deposited in the particle separator (6, 6') or particle filter into carbon monoxide, carbon dioxide, nitrogen and nitrogen monoxide with the aid of the nitrogen dioxide contained in the exhaust stream,
- an SCR catalyst (7, 7') is arranged downstream from the particle separator (6, 6') or particle filter, which catalyst reduces the nitrogen oxides contained in the exhaust stream to nitrogen and water vapour with the aid of the split-off ammonia by way of selective catalytic reduction.

2. An exhaust aftertreatment system according to Claim 1, **characterised in that** the thermolysis catalyst (3, 3', 3") is resistant to droplet impingement and consists of a more thermally stable material than the hydrolysis catalyst (5, 5').

3. An exhaust aftertreatment system according to Claim 1, **characterised in that** the thermolysis catalyst (3, 3', 3") contains at least one of the substances titanium dioxide, silicon dioxide, aluminium oxide, tungsten oxide or zeolite.

4. An exhaust aftertreatment system according to Claim 1, **characterised in that** the thermolysis catalyst (3,3',3") has a porosity which promotes the evaporation of the water content of the aqueous urea solution.

5. An exhaust aftertreatment system according to Claim 1, **characterised in that** the hydrolysis catalyst (5, 5') has a support (18) through which the exhaust flow can pass both in the main direction of flow of the exhaust and transversely thereto such that thorough mixing of the exhaust is yielded.

6. An exhaust aftertreatment system according to Claim 1, **characterised in that** the hydrolysis catalyst (5, 5') is coated with a washcoat which contains at least one of the substances titanium dioxide, silicon dioxide, aluminium oxide, tungsten oxide or zeolite.

7. An exhaust aftertreatment system according to Claim 1, **characterised in that** the hydrolysis catalyst (5, 5') with regard to the exhaust stream has regions of turbulence and low-flow regions, such that the hydrolysis catalyst (5, 5') deposit [sic] soot particles entrained with the exhaust stream in the low-flow regions and converts them with the aid of the nitrogen dioxide contained in the exhaust stream into carbon monoxide, carbon dioxide, nitrogen and nitrogen monoxide.

8. An exhaust aftertreatment system according to one of the preceding claims, **characterised in that** the thermolysis catalyst (3, 3', 3") has a lower content of titanium dioxide than the hydrolysis catalyst (5, 5').

9. An exhaust aftertreatment system according to one of the preceding claims, **characterised in that** the thermolysis catalyst (3, 3', 3") has a higher content of silicon dioxide than the hydrolysis catalyst (5, 5').

10. An exhaust aftertreatment system according to one of the preceding claims, **characterised in that** the anatase content of the thermolysis catalyst (3, 3', 3 ") is lower and/or the rutile content thereof is higher than in the hydrolysis catalyst (5, 5').

11. An exhaust aftertreatment system according to one of the preceding claims, **characterised in that** the anatase content of the thermolysis catalyst (3, 3', 3 ") is between 0% and 30% and/or the rutile content thereof is between 8% and 80% and/or the silicon dioxide content thereof is between 30% and 100%.

12. An exhaust aftertreatment system according to one of the preceding claims, **characterised in that** the anatase content of the hydrolysis catalyst (5, 5') is between 20% and 80% and/or the rutile content thereof is between 0% and 30% and/or the silicon dioxide content thereof is between 20% and 60%.

13. An exhaust aftertreatment system according to one of the preceding claims, **characterised in that** the hydrolysis catalyst is formed by a partial or complete coating of the particle separator or particle filter with corresponding catalyst material.

14. An exhaust aftertreatment system according to one of the preceding claims, **characterised in that** the SCR catalyst is formed by a partial or complete coating of the particle separator or particle filter with corresponding catalyst material.

15. An exhaust aftertreatment system according to one of the preceding claims, **characterised in that** both the hydrolysis catalyst and the SCR catalyst are formed by a partial coating in each case of the particle separator or particle filter with corresponding catalyst material.

## Revendications

1. Système de post-traitement des gaz d'échappement pour réduire la teneur en oxydes d'azote et de particules, pour un moteur à combustion interne fonctionnant avec un excédent d'air,
la réduction des oxydes d'azote se faisant à l'aide d'un catalyseur SCR (7, 7') et la réduction des particules, à l'aide d'un séparateur de particules (6, 6') ou d'un filtre à particules,
système selon lequel
- un catalyseur d'oxydation (4, 4', 4", 17) est installé dans la veine de gaz d'échappement du moteur thermique, ce catalyseur transformant au moins une partie du monoxyde d'azote de la veine des gaz d'échappement en dioxyde d'azote,
- on a un réservoir (10) d'agent réducteur et une installation de dosage (9) pour l'agent réducteur, l'installation de dosage (9) fournissant l'agent réducteur en parallèle au catalyseur d'oxydation (4, 4', 4") dans une veine de gaz d'échappement dérivée en amont du catalyseur d'oxydation (4, 4', 4") et réunissant de nouveau cette veine à la veine partielle des gaz d'échappement du catalyseur d'oxydation (4, 4', 4") pour former la veine des gaz d'échappement,
- l'agent réducteur étant une solution aqueuse d'urée, qui se décompose en ammoniac, en aval du point d'arrivée sous l'effet des gaz d'échappement chauds,
système **caractérisé en ce qu'**
- un catalyseur de thermolyse (3, 3', 3") est installé dans la veine partielle des gaz d'échappement, en aval du point d'arrivée de l'agent réducteur, à proximité du moteur, pour vaporiser à une température des gaz d'échappement supérieure à 135° Celsius, d'une part la fraction d'eau de la solution aqueuse d'urée et le catalyseur est en un matériau catalyseur stabilisé thermiquement vis-à-vis des températures des gaz d'échappement à proximité du moteur, et transforme l'urée de préférence en acide isocyanique,
- au moins un catalyseur d'hydrolyse (5, 5') en aval du catalyseur de thermolyse (3, 3', 3") et à distance de celui-ci, dans la veine des gaz d'échappement, en aval du retour de la veine partielle des gaz d'échappement,
* le catalyseur d'hydrolyse (5, 5') ayant un matériau catalyseur qui transforme en ammoniac et en dioxyde de carbone, l'acide isocyanique résultant de la thermolyse à l'aide de la vapeur d'eau développée dans le catalyseur de thermolyse,
- en aval du catalyseur d'hydrolyse (5, 5'), la veine des gaz d'échappement est équipée d'un séparateur de particules (6, 6') ou filtre à particules qui transforme les particules de noir de fumée déposées dans le séparateur de particules (6, 6') ou filtre à particules, à l'aide du dioxyde d'azote contenu dans la veine des gaz d'échappement pour donner du monoxyde de carbone, du dioxyde de carbone, de l'azote et du monoxyde d'azote, et
- en aval du séparateur de particules (6, 6') ou filtre à particule, un catalyseur SCR (7, 7') réduit par une réduction catalytique sélective en oxydes d'azote et en vapeur d'eau, les oxydes d'azote contenus dans la veine des gaz d'échappement à l'aide de l'ammoniac dégagé.

2. Système de post-traitement des gaz d'échappement selon la revendication 1,
**caractérisé en ce que**
le catalyseur de thermolyse (3, 3', 3") résiste aux chocs provoqués par les gouttes et il est en un matériau thermiquement plus solide que le catalyseur d'hydrolyse (5, 5').

3. Système de post-traitement des gaz d'échappement selon la revendication 1,
**caractérisé en ce que**
le catalyseur de thermolyse (3, 3', 3") comporte au moins l'un des composants suivants : dioxyde de titane, dioxyde de silicium, oxyde d'aluminium, oxyde de tungstène et zéolithes.

4. Système de post-traitement des gaz d'échappement selon la revendication 1,
**caractérisé en ce que**
le catalyseur de thermolyse (3, 3', 3") a une porosité favorisant la vaporisation de la teneur en eau de la solution aqueuse d'urée.

5. Système de post-traitement des gaz d'échappement selon la revendication 1,
**caractérisé en ce que**
le catalyseur d'hydrolyse (5, 5') comporte un support (18) qui peut être traversé à la fois dans la direction principale d'écoulement des gaz d'échappement et aussi transversalement à celle-ci de façon à mélanger les gaz d'échappement.

6. Système de post-traitement des gaz d'échappement selon la revendication 1,
**caractérisé en ce que**
le catalyseur d'hydrolyse (5, 5') est revêtu d'un Washcoat qui contient au moins l'un des composants suivants : dioxyde de titane, dioxyde de silicium, oxyde d'aluminium, oxyde de tungstène ou zéolithes.

7. Système de post-traitement des gaz d'échappement selon la revendication 1,
**caractérisé en ce que**
le catalyseur d'hydrolyse (5, 5') présente des zones à forte turbulence vis-à-vis de la veine des gaz d'échappement et des zones à faible écoulement de façon que le catalyseur d'hydrolyse (5, 5') puisse stocker des particules de noir de fumée entraînées dans les gaz d'échappement dans des zones à faible écoulement et les transformer à l'aide du dioxyde d'azote contenu dans les gaz d'échappement, en monoxyde de carbone, dioxyde de carbone, azote et monoxyde d'azote.

8. Système de post-traitement des gaz d'échappement selon l'une des revendications précédentes,
**caractérisé en ce que**
le catalyseur de thermolyse (3, 3', 3") a une teneur en dioxyde de titane inférieure à celle du catalyseur d'hydrolyse (5, 5').

9. Système de post-traitement des gaz d'échappement selon l'une des revendications précédentes,
**caractérisé en ce que**
le catalyseur de thermolyse (3, 3', 3") contient une plus forte teneur en dioxyde de silicium que le catalyseur d'hydrolyse (5, 5').

10. Système de post-traitement des gaz d'échappement selon l'une des revendications précédentes,
**caractérisé en ce que**
la teneur en anatase du catalyseur de thermolyse (3, 3', 3") est inférieure à celle du catalyseur d'hydrolyse (5, 5') et/ou la teneur en rutile supérieure à celle du catalyseur d'hydrolyse.

11. Système de post-traitement des gaz d'échappement selon l'une des revendications précédentes,
**caractérisé en ce que**
la teneur en anatase du catalyseur de thermolyse (3, 3', 3") se situe entre 0 % et 30 % et/ou la teneur résiduelle en rutile se situe entre 8 % et 80 % et/ou la teneur en dioxyde de silicium se situe entre 30 % et 100 %.

12. Système de post-traitement des gaz d'échappement selon l'une des revendications précédentes,
**caractérisé en ce que**
la teneur en anatase du catalyseur d'hydrolyse (5, 5') se situe entre 20 % et 80 % et elle est supérieure à la constante de rutile comprise entre 0 % et 30 % et/ou la teneur en dioxyde d'aluminium se situe entre 20 % et 60 %.

13. Système de post-traitement des gaz d'échappement selon l'une des revendications précédentes,
**caractérisé en ce que**
le catalyseur d'hydrolyse est formé par un revêtement partiel ou total du séparateur de particules ou du filtre à particules avec un matériau de catalyseur correspondant.

14. Système de post-traitement des gaz d'échappement selon l'une des revendications précédentes,
**caractérisé en ce que**
le catalyseur SCR est formé par un revêtement partiel ou complet du séparateur de particules du filtre à particules avec le matériau catalyseur correspondant.

15. Système de post-traitement des gaz d'échappement selon l'une des revendications précédentes,
**caractérisé en ce qu'**
à la fois le catalyseur d'hydrolyse et aussi le catalyseur SCR sont réalisés chaque fois par un revêtement partiel du séparateur de particules ou du filtre à particules avec le matériau de catalyseur correspondant.
